# EUROPEAN PATENT APPLICATION

(11) **EP 2 645 726 A1**
(43) Date of publication of application: **02.10.2013**
(21) Application number: 11843549.4
(22) Date of filing: 17.11.2011
(51) Int. Cl.: H04N 13/04, G03B 35/02, G06T 19/00

(54) **IMAGE PROCESSING DEVICE, IMAGE PROCESSING METHOD, AND IMAGE PROCESSING PROGRAM**

(30) Priority: 26.11.2010 JP 2010263899
(71) Applicant: Sony Corporation, Tokyo 108-0075 (JP)
(72) Inventor: FUKUI, Koji, Tokyo 108-0075 (JP)
(74) Representative: Malden, Nicholas
(86) International application number: PCT/JP2011/077116
(87) International publication number: WO 2012/070636

(57) **Abstract**

[Object] To realize a natural stereoscopic effect of a stereoscopic image even if the direction or the position of the stereoscopic image is changed.

[Solving Means] When at least one of a direction and a position of a stereoscopic image included in a display image is changed, a generator (2) extracts a stereoscopic image corresponding to at least one of the direction and the position after the change from a plurality of stereoscopic images included in stereoscopic image data (3) being data including a plurality of stereoscopic images different in at least one of a direction and a position of a viewpoint, and generates display image data being data of a display image including the extracted stereoscopic image.

## Description

### Technical Field

The present invention relates to an image processing apparatus, an image processing method, and an image processing program, and is preferably applied when data of display images including stereoscopic images is generated, for example.

### Background Art

Conventionally, in display apparatuses for an electronic book, there is one that displays an animation of turning pages of the electronic book when the user makes an operation for displaying a previous or subsequent page (i.e. page turning operation).

As such an apparatus, the following apparatus has been proposed. Specifically, in the apparatus, using, for example, three-dimensional (3D) computer graphics, pages of an electronic book are arranged as stereoscopic objects in a virtual 3D space and an animation of turning pages are stereoscopically displayed (see, for example, Patent Document 1).

Patent Document 1: Japanese Patent Application Laid-open No. 2005-182820

### Summary of Invention

By the way, the following display apparatus is getting more and more popular. Specifically, the display apparatus displays images from different viewpoints as a left-eye image and a right-eye image such that a user views the left-eye image with his or her left eye and the right-eye image with his or her right eye, which enables the user to stereoscopically view the displayed image. Note that the image displayed such that the user can stereoscopically view in this manner is also referred to as a stereoscopic image hereinafter.

Further, in the electronic book, in particular, a magazine and a photo book, it is assumed that not only texts but also images of photographs or pictures are arranged in pages. In view of this, in a display apparatus capable of displaying a stereoscopic image, it is desirable that images arranged in pages of such an electronic book be also displayed as stereoscopic images.

In view of this, a case where a stereoscopic image is arranged in a page and an animation of turning a page is stereoscopically displayed will be considered. In this case, it is assumed that, as the page is turned (i.e., page image is tilted from state in which page image faces front), also the stereoscopic image arranged in the page is tilted from a state in which the stereoscopic image faces the front.

Here, when the stereoscopic image is actually stereoscopic, even if a direction or a position of the stereoscopic image is changed on a display screen, the stereoscopic image must be stereoscopically viewed.

However, generally, there are limitations on a direction or a position of a viewpoint that enables the stereoscopic image to be stereoscopically viewed. Therefore, if the direction or the position of the stereoscopic image is changed on the display screen, it becomes difficult to stereoscopically view the stereoscopic image.

If the direction or the position of the stereoscopic image is changed, a natural stereoscopic effect of the stereoscopic image cannot be realized.

The present invention has been made in view of the above-mentioned points, and it is an object of the present invention to propose an image processing apparatus, an image processing method, and an image processing program, that can realize a natural stereoscopic effect of a stereoscopic image even if the direction or the position of the stereoscopic image is changed.

In order to solve such a problem, in the present invention, there are provided a generator to generate display image data being data of a display image including a stereoscopic image, and a read-out unit to read out stereoscopic image data from a storage unit storing the stereoscopic image data being data including a plurality of stereoscopic images different in at least one of a direction and a position of a viewpoint. When the at least one of the direction and the position of the stereoscopic image is changed, the generator extracts stereoscopic image corresponding to at least one of the direction and the position after the change from the plurality of stereoscopic images included in the stereoscopic image data read out by the read-out unit, and generates display image data of a display image including the extracted stereoscopic image.

With this, corresponding to the change of the direction or the position of the stereoscopic image, the stereoscopic image suitable for that direction or that position can be displayed. Accordingly, even if the direction or the position of the stereoscopic image is changed, the stereoscopic image can be always stereoscopically viewed.

According to the present invention, corresponding to the change of the direction or the position of the stereoscopic image, the stereoscopic image suitable for that direction or that position can be displayed. Accordingly, even if the direction or the position of the stereoscopic image is changed, the stereoscopic image can be always stereoscopically viewed. Thus, it is possible to realize an image processing apparatus, an image processing method, and an image processing program, that can realize a natural stereoscopic effect of the stereoscopic image even if the direction or the position of the stereoscopic image is changed.

### Brief Description of Drawings

[Fig. 1] A block diagram showing a functional configuration of an image processing apparatus as the outline of an embodiment.
[Fig. 2] A block diagram showing a hardware configuration of a book reading apparatus.
[Fig. 3] A schematic diagram for explaining a book reading screen.
[Figs. 4] Schematic diagrams for explaining how a page image and a photograph image are stereoscopically viewed.
[Fig. 5] A schematic diagram for explaining photograph images respectively corresponding to directions of a viewpoint.
[Fig. 6] A schematic diagram for explaining generation of book images.
[Figs. 7] Schematic diagrams for explaining generation of book images.
[Figs. 8] Schematic diagrams for explaining generation of a 2D panoramic image.
[Figs. 9] Schematic diagrams for explaining generation of a 3D panoramic image.
[Fig. 10] A schematic diagram for explaining generation of a 3D panoramic image.
[Figs. 11] Schematic diagrams for explaining extraction of photograph images in arbitrary directions of the viewpoint.
[Fig. 12] A flowchart showing a book image generation procedure.
[Fig. 13] A schematic diagram for explaining generation of a page image.
[Fig. 14] A schematic diagram for explaining settings of coordinates of a center of a range within which a photograph image is arranged.
[Figs. 15] Schematic diagrams for explaining display of stereoscopic images.
[Figs. 16] Schematic diagrams for explaining display of stereoscopic images.
[Figs. 17] Schematic diagrams for explaining generation of book images according to another embodiment.
[Figs. 18] Schematic diagrams for explaining generation of book images according to another embodiment.
[Figs. 19] Schematic diagrams for explaining how the page image and the photograph image according to another embodiment are stereoscopically viewed.
[Figs. 20] Schematic diagrams for explaining generation of photograph images at different positions of the viewpoint according to another embodiment.

### Mode(s) for Carrying Out the Invention

Hereinafter, embodiments carrying out the invention (hereinafter, referred to as embodiments) will be described. Note that the descriptions will be made in the following order.

### 1. Embodiment

### 2. Other Embodiments

### <1. Embodiment>

### [1-1. Outline of Embodiment]

First, the outline of an embodiment will be described. It should be noted that the description of the outline is followed by descriptions of specific examples of this embodiment.

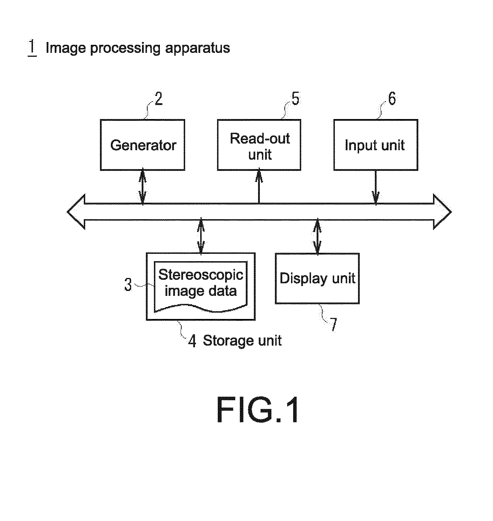

Fig. 1 shows an image processing apparatus 1. The image processing apparatus 1 includes a generator 2. The generator 2 generates display image data being data of a display image including a stereoscopic image. The image processing apparatus 1 further includes a read-out unit 5. The read-out unit 5 reads out, from a storage unit 4 storing stereoscopic image data 3 being data including a plurality of stereoscopic images different in at least one of a direction and a position of a viewpoint, the stereoscopic image data 3.

When at least one of a direction and a position of a stereoscopic image included in a display image is changed, the generator 2 extracts a stereoscopic image corresponding to at least one of the direction and the position after the change, from the plurality of stereoscopic images included in the stereoscopic image data 3 read out by the read-out unit 5. Then, the generator 2 generates display image data of a display image including the extracted stereoscopic image.

With this, corresponding to the change of the direction or the position of the stereoscopic image, the image processing apparatus 1 can display a stereoscopic image suitable for that direction or that position. Accordingly, even if the direction or the position of the stereoscopic image is changed, a stereoscopic image can be always stereoscopically viewed. Thus, even if the direction or the position of the stereoscopic image is changed, the image processing apparatus 1 can realize a natural stereoscopic effect of the stereoscopic image.

More specifically, the stereoscopic image included in the display image may be arranged in an object included in the display image. Here, it is assumed that at least one of a direction and a position of the stereoscopic image arranged in the object is changed with a change of at least one of a direction and a position of the object. In this case, the generator 2 may extract a stereoscopic image corresponding to at least one of the direction and the position after the change, from the plurality of stereoscopic images included in the stereoscopic image data 3 read out by the read-out unit 5. Then, the generator 2 may arrange the extracted stereoscopic image in the object changed in at least one of the direction and the position, and may generate display image data of a display image including the object.

Alternatively, in this case, the stereoscopic image data 3 may be image data of a panoramic image obtained by connecting a plurality of stereoscopic images different in at least one of a direction and a position of a viewpoint. In addition, a portion of the object included in the display image, in which the stereoscopic image is arranged, may be made transparent.

Here, it is assumed that at least one of the direction and the position of the stereoscopic image arranged in the object is changed with the change of at least one of the direction and the position of the object. In this case, the generator 2 may arrange the panoramic image such that a portion of the panoramic image corresponding to at least one of the direction and the position after the change is located below the portion of the object, which has been made transparent, the object being changed in at least one of the direction and the position. As a result, the generator 2 extracts, from the panoramic image, the stereoscopic image corresponding to at least one of the direction and the position after the change, and arranges the stereoscopic image in the object.

Alternatively, the stereoscopic image data 3 may be data for each of the plurality of stereoscopic images different in at least one of the direction and the position of the viewpoint.

In this case, a portion of the object included in the display image, in which the stereoscopic image is arranged, may be made transparent. Here, it is assumed that at least one of the direction and the position of the stereoscopic image arranged in the object is changed with the change of at least one of the direction and the position of the object. In this case, the generator 2 may extract a stereoscopic image corresponding to at least one of the direction and the position after the change by selecting, from the plurality of stereoscopic images included in the stereoscopic image data 3, the stereoscopic image corresponding to at least one of the direction and the position after the change. Then, the generator 2 may arrange the extracted stereoscopic image below the portion of the object, which has been made transparent, the object being changed in at least one of the direction and the position.

Alternatively, when an operation input for changing at least one of the direction and the position of the stereoscopic image included in the display image is performed via the input unit 6, the generator 2 may extract the stereoscopic image corresponding to at least one of the direction and the position after the change, from the plurality of stereoscopic images included in the stereoscopic image data 3. Then, the generator 2 may generate display image data of a display image including the extracted stereoscopic image and may cause a display unit 7 to display the display image based on the display image data.

Alternatively, based on the stereoscopic image data 3 read out by the read-out unit 5, the generator 2 may generate moving image data of a moving image in which at least one of the direction and the position of the stereoscopic image included in the display image continuously changes.

Hereinafter, a specific example of the image processing apparatus 1 with this configuration will be described in detail.

### [1-2. Specific Examples of Embodiment]

### [1-2-1. Hardware Configuration of Book Reading Apparatus]

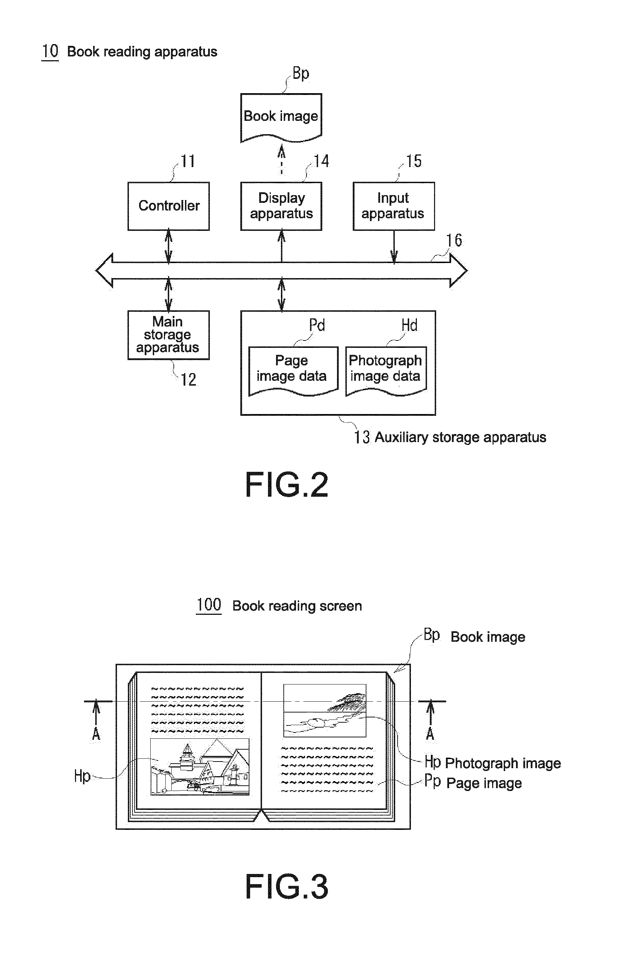

Next, referring to Fig. 2, a hardware configuration of a book reading apparatus 10 being the specific example of the above-mentioned image processing apparatus 1 will be described.

The book reading apparatus 10 includes a controller 11, a main storage apparatus 12, an auxiliary storage apparatus 13, a display apparatus 14, and an input apparatus 15. The controller 11, the main storage apparatus 12, the auxiliary storage apparatus 13, the display apparatus 14, and the input apparatus 15 are connected to one another via a bus 16. The controller 11 includes a central processing unit (CPU). The main storage apparatus 12 includes, for example, a random access memory (RAM) and a read only memory (ROM). The auxiliary storage apparatus 13 includes, for example, a magnetic disc, an optical disc, and a flash memory.

In the book reading apparatus 10, the controller 11 generally controls the entire apparatus, reads programs stored in the ROM or the auxiliary storage apparatus 13 and develops the programs in the RAM, and executes various types of processing and controls each unit according to the programs.

The display apparatus 14 includes, for example, a liquid crystal display to display the stereoscopic image. Note that examples of a display method for a stereoscopic image include a passive method using polarized glasses or the like and an active method using liquid-crystal shutter glasses or the like, that are methods in which a user wears glasses, and a parallax barrier method and a lenticular lens method, that are methods in which the user can observe a stereoscopic image with naked eyes. The display apparatus 14 may be adapted for any display method.

The controller 11 is configured to execute various types of processing according to an operation signal inputted via the input apparatus 15, for example, a remote controller.

Further, the auxiliary storage apparatus 13 stores page image data Pd and photograph image data Hd. The page image data Pd serves to generate a page image being an image of a page of an electronic book and the photograph image data Hd serves to generate a photograph image being an image of a photograph to be arranged in a page, as data of the electronic book. When the controller 11 receives an operation input for displaying the electronic book via the input apparatus 15, the controller 11 generates book image data being data of a book image Bp in which a photograph image is arranged in a page, based on the page image data Pd and the photograph image data Hd.

Then, the controller 11 causes the display apparatus 14 to display the book image Bp based on the book image data. Note that the controller 11 causes the display apparatus 14 to display a left-eye image and a right-eye image of the book image Bp. As a result, the book reading apparatus 10 enables the user to stereoscopically view the electronic book and read the electronic book.

It should be noted that the specific hardware example of the generator 2 and the read-out unit 5 of the image processing apparatus 1 described in the outline of the embodiment is the controller 11 of the book reading apparatus 10 described above. Further, the specific hardware example of the storage unit 4 of the image processing apparatus 1 is the auxiliary storage apparatus 13 of the book reading apparatus 10. In addition, the specific hardware example of the input unit 6 of the image processing apparatus 1 is the input apparatus 15 of the book reading apparatus 10. In addition, the specific hardware example of the display unit 7 of the image processing apparatus 1 is the display apparatus 14 of the book reading apparatus 10.

### [1-2-2. Display of Electronic Book]

Next, a display function of the electronic book in the book reading apparatus 10 will be described. When the controller 11 receives an operation input for selecting an arbitrary electronic book via the input apparatus 15, the controller 11 causes the display apparatus 14 to display a book reading screen 100 shown in Fig. 3 and causes the display apparatus 14 to display a book image Bp of the selected electronic book.

The book image Bp is an image corresponding to two opened pages of the electronic book. When the electronic book is first displayed, images of a first page and a second page of the electronic book, for example, are displayed.

Further, the book image Bp includes a page image Pp and a photograph image Hp. The page image Pp is an image generated by arranging the page of the electronic book as a stereoscopic object in a virtual 3D space using a three-dimensional computer graphics, for example. The photograph image Hp is an image of a photograph arranged in a page as an object of the page image Pp.

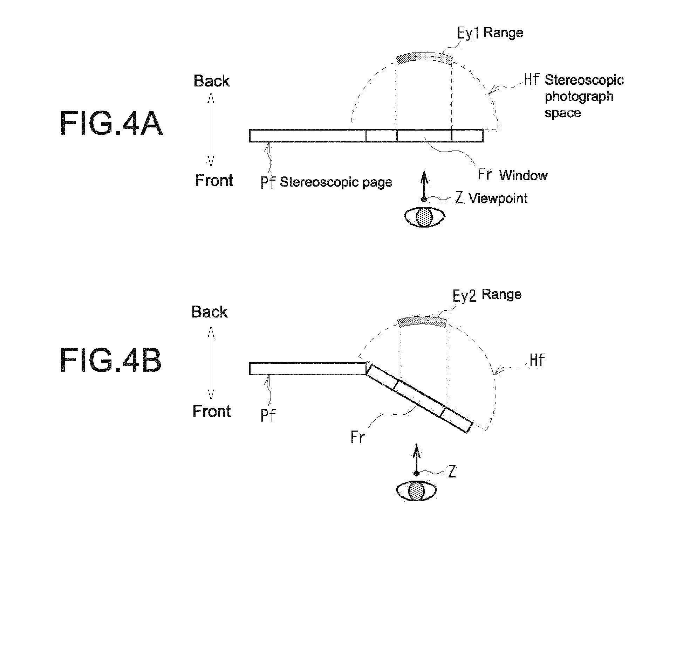

The page image Pp and the photograph image Hp are each configured to be stereoscopically viewed by the user. Here, for explaining how the page image Pp and the photograph image Hp are stereoscopically viewed, a cross-section of a virtual stereoscopic book shown by the book image Bp, which is taken along the line A-A, is schematically shown in Figs. 4.

The page image Pp is stereoscopically viewed as a stereoscopic shape Pf of a page of a book (hereinafter, also referred to as stereoscopic page). Note that the page faces the front in a state in which the page is not turned as shown in Fig. 4A, and the page is gradually tilted and finally faces the back when the page is turned as shown in Fig. 4B.

Further, a portion of the page image Pp, in which the photograph image Hp is arranged, functions as a window Fr in the stereoscopic page Pf. The photograph image Hp is stereoscopically viewed as if the photograph image Hp is situated on the back side of the window Fr in the stereoscopic page Pf, as a stereoscopic space Hf shown by the photograph (hereinafter, also referred to as stereoscopic photograph space). Therefore, the book image Bp is viewed as if the space shown by the photograph extends having a certain depth at the back of the page.

Further, in the book reading apparatus 10, a range (Ey1 or Ey2) visible when the user views the stereoscopic photograph space Hf through the window Fr from a viewpoint Z is displayed as the photograph image Hp.

For example, when the page is turned as shown in Fig. 4B from the state in which the page is not turned as shown in Fig. 4A, the direction of the viewpoint Z changes from a perpendicular direction to an oblique direction corresponding to the direction of the page as viewed from a window Fr side. At this time, in the book reading apparatus 10, as the range visible when the user views the stereoscopic photograph space Hf through the window Fr from the viewpoint Z moves from the range Ey1 to the range Ey2, the range displayed as the photograph image Hp is changed from the range Ey1 to the range Ey2.

In this manner, it is assumed that the space (stereoscopic photograph space Hf) shown by the photograph image Hp is actually stereoscopic. Then, it is considered that, as the direction of the window Fr (photograph image Hp) changes with turning of the page, the direction of the viewpoint Z with respect to the stereoscopic photograph space Hf changes.

In view of this, in the book reading apparatus 10, the photograph image Hp is changed such that the direction of the viewpoint with respect to the stereoscopic photograph space Hf changes corresponding to the change of the direction of the photograph image Hp with turning of the page. Specifically, when the page is turned from the right to the left, the direction of the viewpoint with respect to the stereoscopic photograph space Hf is changed from the front to the left. When the page is turned from the left to the right, the direction of the viewpoint with respect to the stereoscopic photograph space Hf is changed from the front to the right.

With this, also while the page is being turned, the book reading apparatus 10 can realize a natural stereoscopic effect of the space (stereoscopic photograph space Hf) shown by the photograph image Hp arranged in the page.

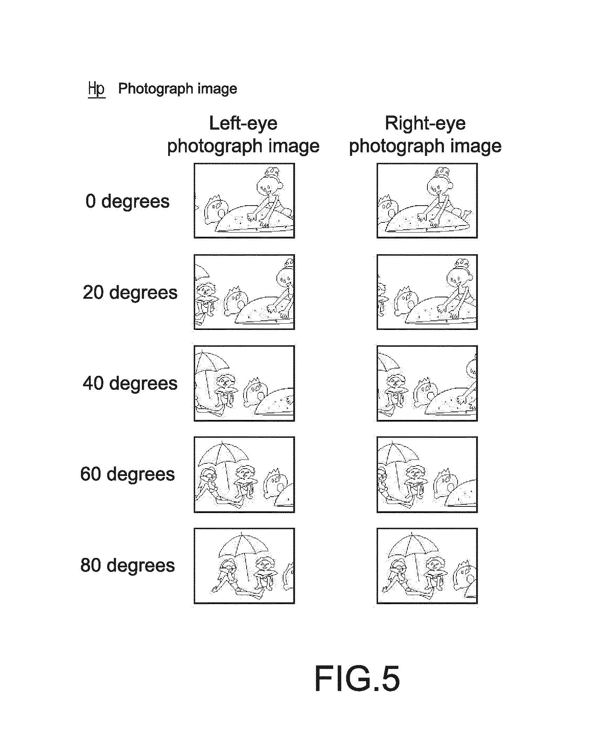

By the way, on the premise of processing of changing display of the photograph image Hp in this manner, as shown in Fig. 5, a plurality of photograph images Hp different in direction of the viewpoint in a horizontal direction are prepared. Here, the direction of the page when the page is not turned (i.e., page faces front) is set to 0 degrees. At this time, the direction of the viewpoint as viewed from a page (photograph image Hp) side is 0 degrees.

For example, regarding a page displayed on a right-hand side when the book is opened, the page is turned from the right to the left. Therefore, when the direction of the page is changed to the left by 20 degrees, 40 degrees, 60 degrees, and so on, the direction of the viewpoint is also horizontally changed to the left by 20 degrees, 40 degrees, 60 degrees, and so on. Therefore, regarding the photograph image Hp in the page, in addition to an image having the direction of the viewpoint of 0 degrees, images when the direction of the viewpoint is horizontally changed to, for example, the left by 20 degrees, 40 degrees, 60 degrees, and 80 degrees are prepared. Note that, when the direction of the page becomes 90 degrees or more, the page becomes invisible. Therefore, it is unnecessary to prepare the photograph image Hp when the direction of the viewpoint becomes 90 degrees or more.

Further, in order to display the photograph image Hp as the stereoscopic image, the left-eye image and the right-eye image are prepared for each of the directions of the viewpoint in the photograph image Hp. It should be noted that the left-eye image and the right-eye image are images from different viewpoints in the horizontal direction, and hence positions of subjects are deviated in the horizontal direction. Note that the photograph image Hp for a left eye is also referred to a left-eye photograph image and the photograph image Hp for a right eye is also referred to a right-eye photograph image.

In addition, in the book reading apparatus 10, in order to also display the page image Pp as the stereoscopic image, a left-eye image and a right-eye image of the page image Pp are generated. Note that the page image Pp for a left eye is also referred to as a left-eye page image and the page image Pp for a right eye is also referred to as a right-eye page image.

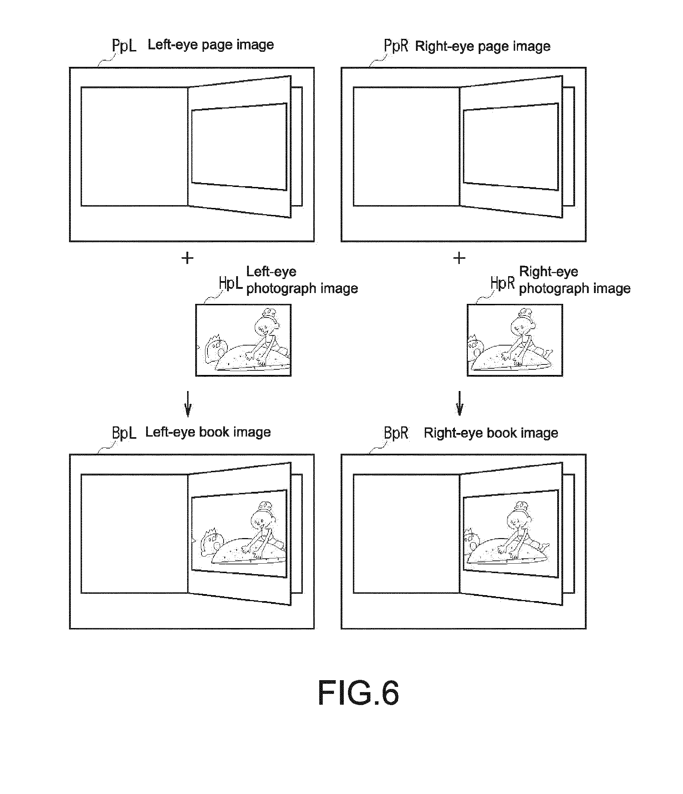

Then, as shown in Fig. 6, the book reading apparatus 10 combines a left-eye page image PpL with a left-eye photograph image HpL and generates a left-eye image BpL (hereinafter, also referred to as left-eye book image) of the book image Bp with the left-eye photograph image HpL being arranged in the left-eye page image PpL. Further, the book reading apparatus 10 combines a right-eye page image PpR with a right-eye photograph image HpR and generates the right-eye image BpR (hereinafter, also referred to as right-eye book image) of the book image Bp in which the right-eye photograph image HpR is arranged in the right-eye page image PpR.

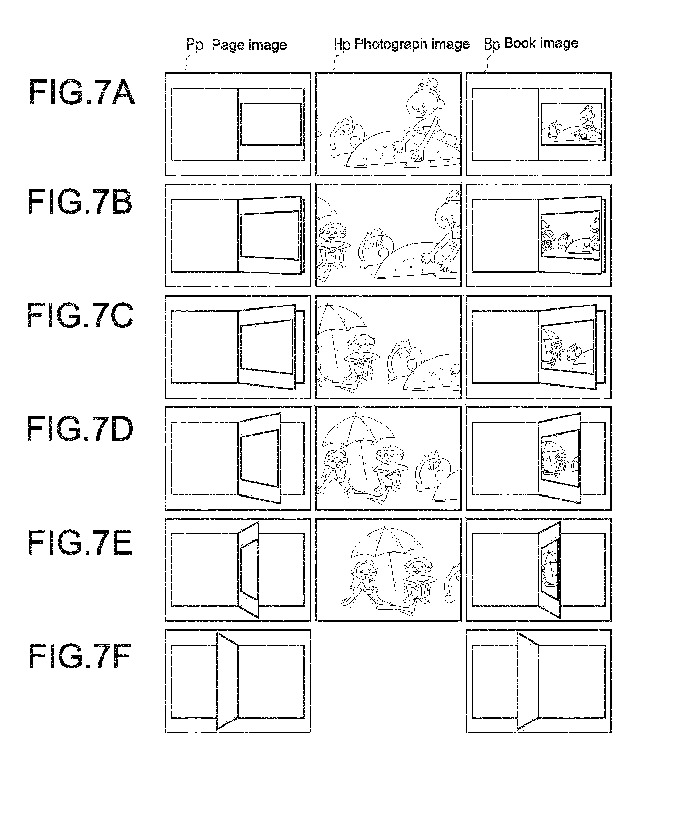

Specifically, as shown in Fig. 7A, when the page is not turned, the book reading apparatus 10 generates and displays the left-eye book image BpL in which the left-eye photograph image HpL having the direction of the viewpoint of 0 degrees is arranged in the left-eye page image PpL having the direction of the page of 0 degrees. Further, the book reading apparatus 10 generates and displays a right-eye book image BpR in which the right-eye photograph image HpR having the direction of the viewpoint of 0 degrees is arranged in the right-eye page image PpR having the direction of the page of 0 degrees.

Further, it is assumed that, from the state in Fig. 7A, as shown in Fig. 7B, the page on the right-hand side is turned and the direction of the page on the right-hand side is changed from 0 degrees to 20 degrees. At this time, the book reading apparatus 10 generates and displays the left-eye book image BpL in which the left-eye photograph image HpL having the direction of the viewpoint of 20 degrees is arranged in the left-eye page image PpL having the direction of the page on the right-hand side of 20 degrees. Further, the book reading apparatus 10 generates and displays the right-eye book image BpR in which the right-eye photograph image HpR having the direction of the viewpoint of 20 degrees is arranged in the right-eye page image PpR having the direction of the page on the right-hand side of 20 degrees.

With this, corresponding to the change of the direction of the page from 0 degrees to 20 degrees, in the book image Bp, the photograph image Hp having the direction of the viewpoint of 0 degrees, which has been arranged in the page image Pp, is replaced by the photograph image Hp having the direction of the viewpoint of 20 degrees.

Further, when the direction of the page on the right-hand side is changed to 40 degrees, 60 degrees, or 80 degrees as shown in Fig. 7C, 7D, or 7E, the left-eye book image BpL and the right-eye book image BpR are similarly generated and displayed.

Note that, when the direction of the page on the right-hand side becomes 90 degrees or more as shown in Fig. 7F, the page becomes invisible. At the same time, the photograph image Hp arranged in the page also becomes invisible.

In this manner, in the book reading apparatus 10, the direction of the page (photograph image Hp) corresponds to the photograph image Hp having the direction of the viewpoint suitable for displaying the photograph image Hp in that direction as if the photograph image Hp is actually stereoscopic. Then, corresponding to the change of the direction of the page, the book reading apparatus 10 arranges the photograph image Hp corresponding to the direction of the page after the change in the page image Pp, and generates and displays the book image Bp. That is, in the book reading apparatus 10, when the direction of the page is changed, the photograph image Hp arranged in the page is replaced by the photograph image Hp having the direction of the viewpoint corresponding to the direction of the page after the change.

### [1-2-3. Generation of Photograph Images Different in Direction of Viewpoint]

Next, a method of generating photograph images Hp different in direction of the viewpoint in the horizontal direction will be specifically described.

First, as a method of obtaining images different in direction of the viewpoint in the horizontal direction, there is a method of generating a panoramic image by continuously capturing a plurality of images while rotationally moving a camera in the horizontal direction and connecting the plurality of images.

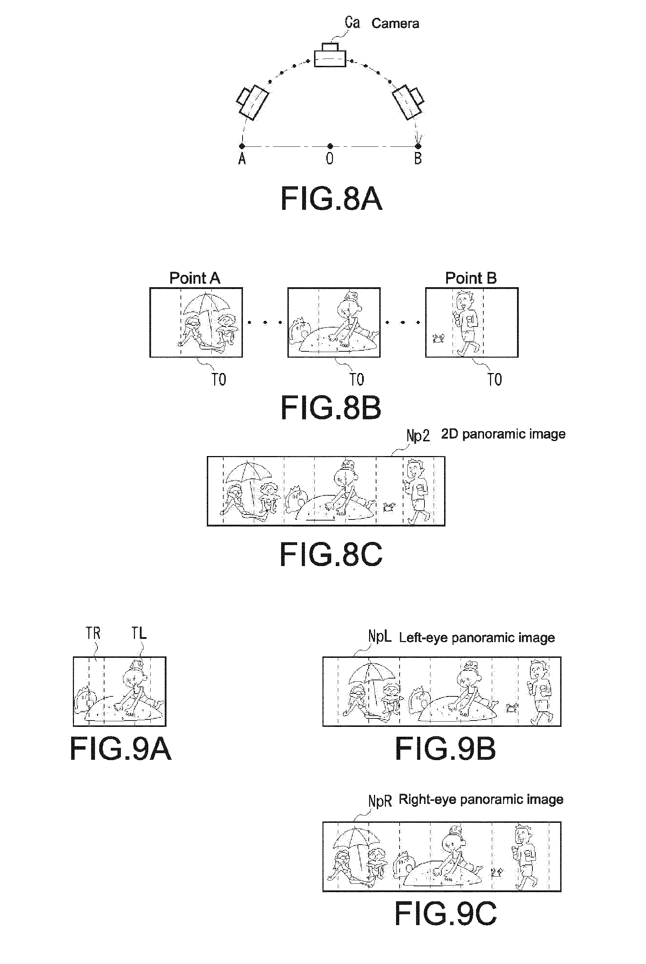

In this method, as shown in Fig. 8A, the user holds the camera Ca in his or her hand, and presses a shutter button and horizontally rotates the camera Ca by a semi-turn from the left (point A) to the right (point B) with a point O being a center of rotation. At this time, when the camera Ca detects a press of the shutter button, the camera Ca continuously captures, for example, about several tens to hundreds of images.

Those images are images shown in Fig. 8B and different in direction of the viewpoint (i.e., capturing direction). When strip-like areas TO each having a predetermined width at a center are cut out from those images and connected, a panoramic image Np2 shown in Fig. 8C is generated. Note that the thus generated panoramic image is also referred to as a 2D panoramic image.

Further, also when a stereoscopically viewable panoramic image (hereinafter, referred to as 3D panoramic image) is generated, as shown in Fig. 8A, the image is generated by cutting out strip-like areas each having a predetermined width from a plurality of images continuously captured while the camera Ca is rotationally moved in the horizontal direction and by connecting them. Note that the left-eye image of the panoramic image is also referred to as a left-eye panoramic image and the right-eye image of the panoramic image is also referred to as a right-eye panoramic image.

Here, in the 3D panoramic image, unlike the 2D panoramic image, as shown in Fig. 9A, the position for cutting out a strip-like area from a captured image is set to be different between the left-eye panoramic image and the right-eye panoramic image.

Specifically, a strip-like area for the left-eye panoramic image TL (hereinafter, also referred to as left-eye image strip) is cut out from a position slightly deviated to the right from a center of a captured image. On the other hand, a strip-like area for the right-eye panoramic image TR (hereinafter, also referred to as right-eye image strip) is cut out from a position slightly deviated to the left from the center of the captured image.

Then, as shown in Fig. 9B, a left-eye panoramic image NpL is generated by cutting out only the left-eye image strips TL from the plurality of images continuously captured and connecting the left-eye image strips TL. On the other hand, as shown in Fig. 9C, a right-eye panoramic image NpR is generated by cutting out only the right-eye image strips TR from the plurality of images continuously captured and connecting the right-eye image strips TR. Note that the left-eye panoramic image NpL and the right-eye panoramic image NpR are also collectively referred to as a 3D panoramic image.

Hereinafter, a mechanism by which the thus generated left-eye panoramic image NpL and right-eye panoramic image NpR can realize a stereoscopic view will be described.

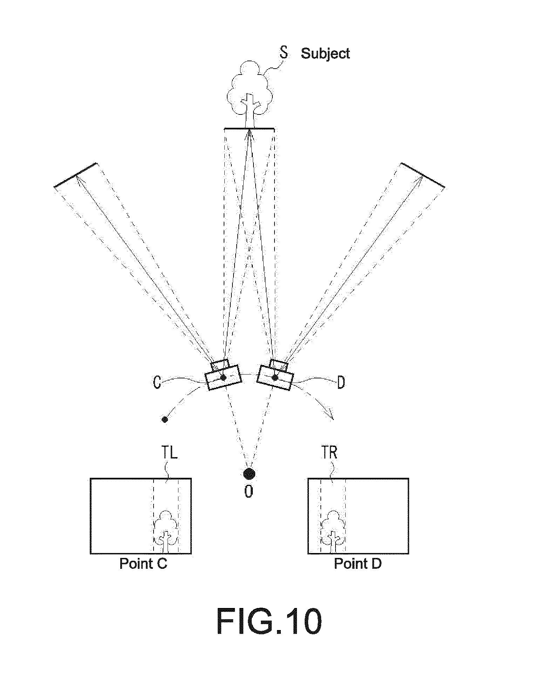

Fig. 10 shows a state in which the camera Ca captures a subject S at the point C and the point D while the camera Ca is rotationally moved in the horizontal direction with the point O being a center of rotation. At the point C, an image of the subject S as viewed from the left in the left-eye image strip TL is stored. On the other hand, at the point D, an image of the subject S as viewed from the right in the right-eye image strip TR is stored.

Therefore, the left-eye panoramic image NpL and the right-eye panoramic image NpR include images obtained by capturing the same subject S from different viewpoints (left-hand side and right-hand side). Therefore, the left-eye panoramic image NpL and the right-eye panoramic image NpR enable the subject S to be stereoscopically viewed.

In other words, the thus generated 3D panoramic image (left-eye panoramic image NpL and right-eye panoramic image NpR) is an image obtained by connecting the plurality of stereoscopic images different in direction of the viewpoint.

Therefore, by extracting an arbitrary range from the left-eye panoramic image NpL and the right-eye panoramic image NpR, the left-eye photograph image HpL and the right-eye photograph image HpR in an arbitrary direction of the viewpoint can be obtained.

For example, as shown in Fig. 8A, it is assumed that the left-eye panoramic image NpL and the right-eye panoramic image NpR are generated using images continuously captured by the camera Ca while the camera Ca is horizontally moved by a semi-turn (i.e., 180 degrees). At this time, it is assumed that a capturing direction (direction of viewpoint) when the camera Ca is rotated by a 1/4 turn (i.e., 90 degrees) is 0 degrees (front). Then, the left-eye panoramic image NpL and the right-eye panoramic image NpR include images having the direction of the viewpoint of from approximately -90 degrees to +90 degrees. Note that, here, an angle when the direction of the viewpoint changes from 0 degrees to the left is set to a plus value and an angle when the direction of the viewpoint changes from 0 degrees to the right is set to a minus value.

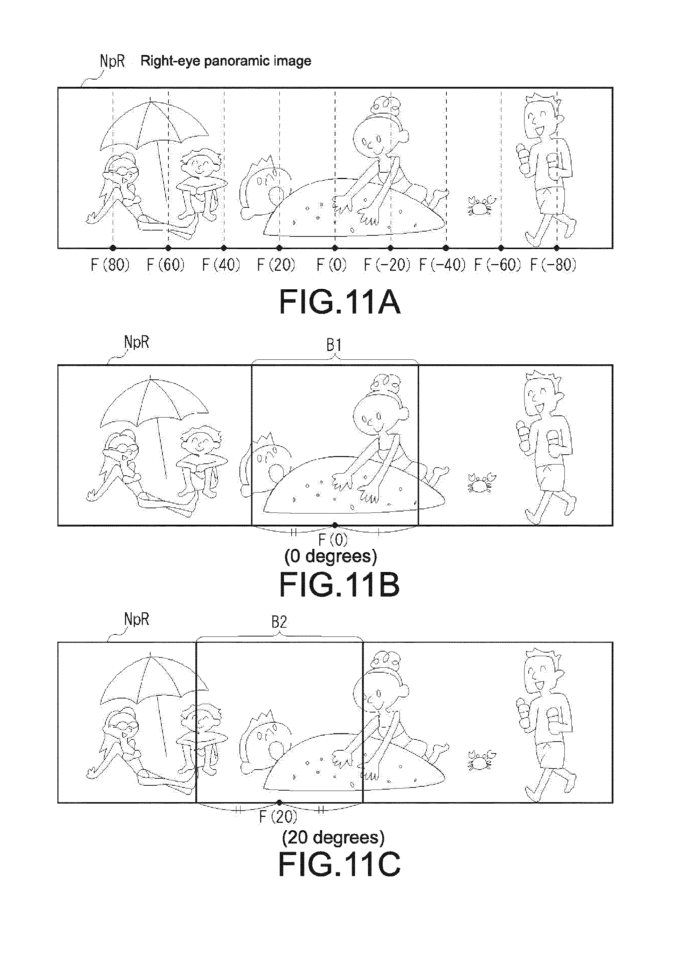

In this case, as shown in Fig. 11A, in the right-eye panoramic image NpR, a position of an arbitrary point F in a lateral direction corresponds to each direction of the viewpoint. For example, a position of a point F (0) at a center corresponds to the direction of the viewpoint of 0 degrees. Further, a point F located on the left-hand side with respect to the point F (0) at the center corresponds to an angle when the direction of the viewpoint changes to the left with respect to 0 degrees. A point F located on the right-hand side with respect to the point F (0) at the center corresponds to an angle when the direction of the viewpoint changes to the right with respect to 0 degrees. Further, as it becomes further from the point F (0) at the center in the lateral direction, an absolute value of an angle indicating the direction of the viewpoint becomes larger. Note that Fig. 11A shows, as an example, the point F (-80), the point F (-60), the point F (-40), the point F (-20), the point F (0), the point F (20), the point F (40), the point F (60), and the point F (80) respectively corresponding to the directions of the viewpoint of -80 degrees, -60 degrees, -40 degrees, -20 degrees, 0 degrees, 20 degrees, 40 degrees, 60 degrees, and 80 degrees.

Therefore, as shown in Fig. 11B, when an arbitrary range B1 with the point F (0) corresponding to the direction of the viewpoint of, for example, 0 degrees being a center is extracted from the right-eye panoramic image NpR, the right-eye photograph image HpR having the direction of the viewpoint of 0 degrees can be obtained.

Further, as shown in Fig. 11C, when an arbitrary range B2 with the point F (20) corresponding to, for example, 20 degrees of the direction of the viewpoint being a center is extracted from the right-eye panoramic image NpR, the right-eye photograph image HpR having 20 degrees of the direction of the viewpoint can be obtained.

That is, when an arbitrary range with a position corresponding to the direction of the viewpoint suitable for the direction of the page being a center is extracted from the right-eye panoramic image NpR, the right-eye photograph image HpR having the direction of the viewpoint suitable for the direction of the page can be obtained.

Similarly, when an arbitrary range with a position corresponding to the direction of the viewpoint suitable for the direction of the page being a center is extracted also from the left-eye panoramic image NpL, the left-eye photograph image HpL having the direction of the viewpoint suitable for the direction of the page can be obtained.

In this manner, regarding the photograph image Hp arranged in the page image Pp, image data of the 3D panoramic image is generated by performing panoramic photography when a photograph therefor is captured. Further, data (hereinafter, also referred to as correspondence data) indicating a correspondence between the direction of the page and a position in the lateral (horizontal) direction in the 3D panoramic image that corresponds to the direction of the viewpoint suitable for that direction is also generated. The image data of the 3D panoramic image and the correspondence data are stored in the auxiliary storage apparatus 13 of the book reading apparatus 10 as the photograph image data Hd.

Then, in the book reading apparatus 10, based on the photograph image data Hd, the left-eye photograph image HpL and the right-eye photograph image HpR each having the direction of the viewpoint suitable for the direction of the page are extracted from the left-eye panoramic image NpL and the right-eye panoramic image NpR.

Accordingly, the auxiliary storage apparatus 13 only needs to store two images of the left-eye panoramic image NpL and the right-eye panoramic image NpR, and hence a storage capacity can be saved in comparison with a case where left-eye photograph images HpL and right-eye photograph images HpR are stored for each of a plurality of different directions of the viewpoint.

### [1-2-4. Book Image Generation Procedure]

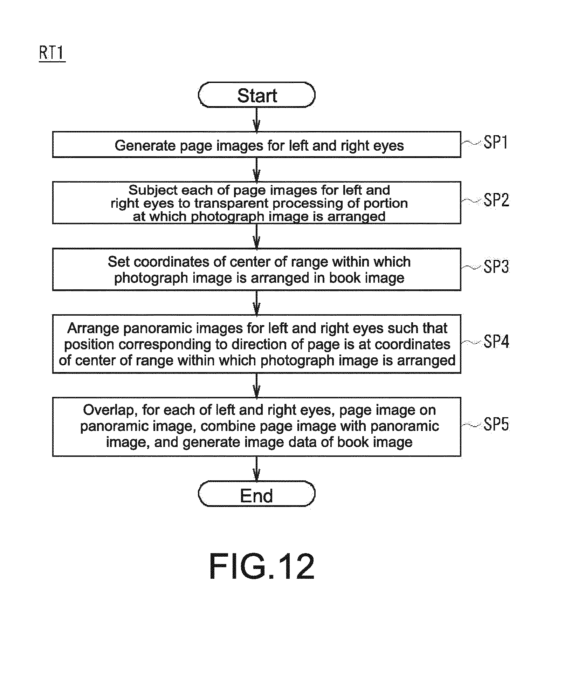

Next, a procedure of processing of generating the book image Bp in the book reading apparatus 10 (also referred to as book image generation procedure) will be described with reference to a flowchart of Fig. 12. Note that a book image generation procedure RT1 shown in Fig. 12 is a procedure of processing executed by the controller 11 of the book reading apparatus 10 according to the programs stored in the ROM or the auxiliary storage apparatus 13.

When an operation input for turning a page is performed via, for example, the input apparatus 15, the controller 11 starts the book image generation procedure RT1. The controller 11 proceeds to Step SP1.

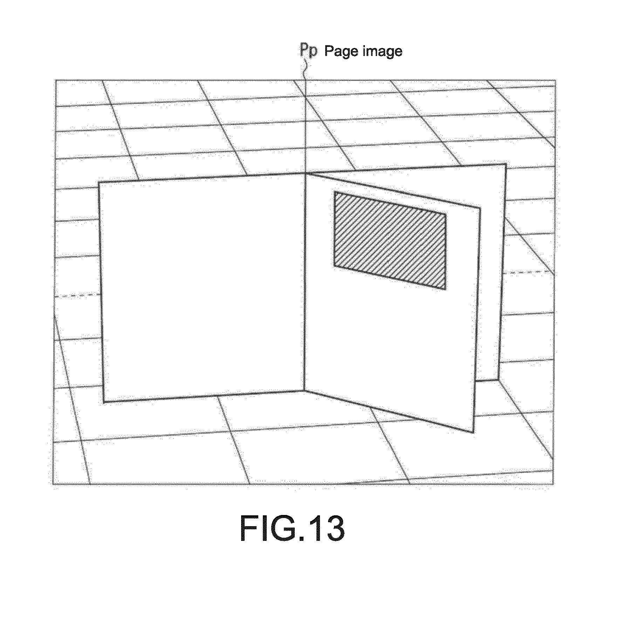

In Step SP1, the controller 11 reads out the page image data Pd stored in the auxiliary storage apparatus 13. Then, based on the page image data Pd, the controller 11 generates the page image Pp including a page of the electronic book that is arranged as a stereoscopic object in a virtual 3D space on the RAM as shown in Fig. 13.

At this time, the controller 11 generates the page image Pp in which the direction of the page has been changed according to the operation input for turning the page. Note that, when the turning of the page is displayed as an animation, the page image Pp in which the direction of the page has been changed at every several degrees, for example, 6 degrees may be generated.

Then, the controller 11 generates an image (left-eye page image PpL) when the page of the electronic book is viewed from the left and an image (right-eye page image PpR) when the page of the electronic book is viewed from the right, by deviating the viewpoint in a left- and right-hand directions in the virtual 3D space. The controller 11 proceeds to next Step SP2.

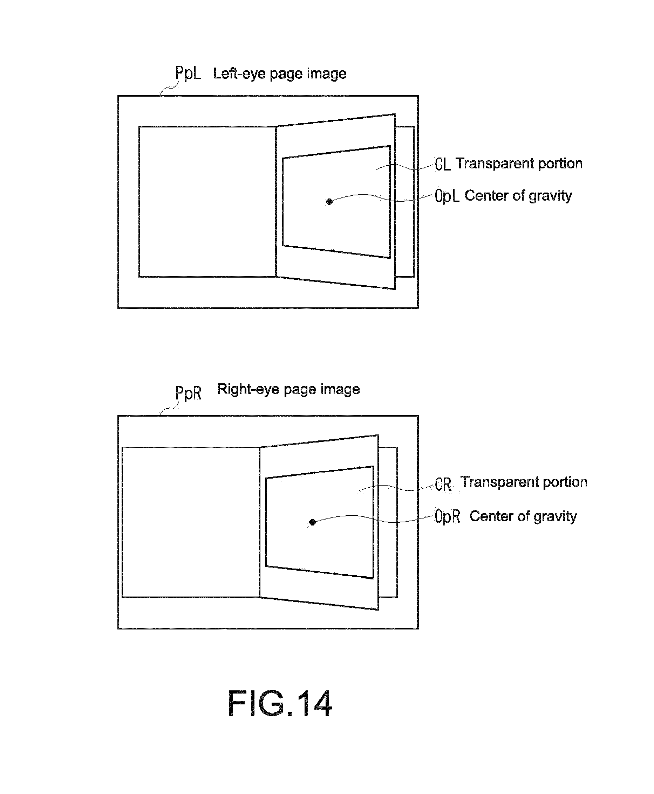

In Step SP2, the controller 11 subjects each of the left-eye page image PpL and the right-eye page image PpR to processing of making the portions CL and CR (Fig. 14) of the page transparent, in each of which the photograph image Hp is arranged. The controller 11 proceeds to next Step SP3.

In Step SP3, the controller 11 sets a position of the book image Bp, in which the photograph image Hp is arranged. Specifically, the controller 11 sets coordinates of a center of a range of the book image Bp, in which the photograph image Hp is arranged.

The page image Pp is the stereoscopic image, and hence, as shown in Fig. 14, positions of pages are slightly deviated in the horizontal direction in the left-eye page image PpL and the right-eye page image PpR. Therefore, in them, the positions CL and CR in each of which the photograph image Hp is arranged (hereinafter, also referred to as transparent portions) are also deviated in the horizontal direction.

However, in order to display the photograph image Hp such that the photograph image Hp can be stereoscopically viewed, it is necessary to display the left-eye photograph image HpL and the right-eye photograph image HpR at the same position on the display screen. Therefore, in the left-eye book image BpL and the right-eye book image BpR, it is necessary to set the positions at each of which the photograph image Hp is arranged to be the same position.

In view of this, the controller 11 calculates coordinates of centers of gravity OpL and OpR of the transparent portions CL and CR in the left-eye page image PpL and the right-eye page image PpR, respectively. Then, the controller 11 sets coordinates of a middle point of a line linking the centers of gravity OpL and OpR as coordinates of the center of a range within which the photograph image Hp is arranged in the left-eye book image BpL and the right-eye book image BpR. The controller 11 proceeds to next Step SP4.

In Step SP4, the controller 11 reads out the photograph image data Hd from the auxiliary storage apparatus 13. Then, based on the correspondence data included in the photograph image data Hd, the controller 11 acquires coordinates of a position in the 3D panoramic image, which corresponds to the direction of the page after the change.

The controller 11 arranges the left-eye panoramic image NpL such that the acquired position in the left-eye panoramic image NpL is located at the coordinates of the center of the range within which the photograph image Hp is arranged, the coordinates being set in Step SP3.

Further, the controller 11 arranges the right-eye panoramic image NpL such that the acquired position in the right-eye panoramic image NpL is located at the coordinates of the center of the range within which the photograph image Hp is arranged, the coordinates being set in Step SP3. Then, the controller 11 proceeds to next Step SP5.

In Step SP5, the controller 11 generates the image data of the left-eye book image BpL by overlapping the left-eye page image PpL on the left-eye panoramic image NpL arranged in Step SP4 and combining the left-eye page image PpL with the left-eye panoramic image NpL.

With this, in the left-eye book image BpL, through the transparent portion CL of the left-eye page image PpL, a range having the same width as a lateral width as the transparent portion CL with a position in the left-eye panoramic image NpL, which corresponds to the direction of the viewpoint suitable for the direction of the page, being a center is viewed. That is, the left-eye photograph image HpL having the direction of the viewpoint suitable for the direction of the page is extracted from the left-eye panoramic image NpL. The extracted left-eye photograph image HpL is located in the left-eye book image BpL.

Further, the controller 11 generates the image data of the right-eye book image BpR by overlapping the right-eye page image PpR on the right-eye panoramic image NpR arranged in Step SP4 and combining the right-eye page image PpR with the right-eye panoramic image NpR.

With this, in the right-eye book image BpR, through the transparent portion CR of the right-eye page image PpR, a range having the same width as a lateral width as the transparent portion CR with a position in the right-eye panoramic image NpR, which corresponds to the direction of the viewpoint suitable for the direction of the page, being a center is viewed. That is, the right-eye photograph image HpL having the direction of the viewpoint suitable for the direction of the page is extracted from the right-eye panoramic image NpR. The extracted right-eye photograph image HpR is located in the right-eye book image BpR.

In this manner, the controller 11 generates the image data of the left-eye book image BpL and the image data of the right-eye book image BpR. Then, the controller 11 terminates the book image generation procedure RT1.

Then, based on the image data, the controller 11 is configured to cause the display apparatus 14 to display the left-eye book image BpL and the right-eye book image Bp.

### [1-2-5. Operations and Effects]

In the above-mentioned configuration, the auxiliary storage apparatus 13 of the book reading apparatus 10 stores the image data of the 3D panoramic image being an image obtained by connecting the plurality of stereoscopic images different in direction of the viewpoint.

When an operation input for displaying the electronic book is performed, the controller 11 of the book reading apparatus 10 causes the display apparatus 14 to display the book image Bp including a page of the electronic book. In the page included in the book image Bp, the photograph image Hp being the stereoscopic image is arranged.

When the operation input of turning the page (i.e., changing direction of page and direction of photograph image Hp) is performed, the controller 11 generates the page image Pp changed in direction of the page and subjecting the page image Pp to processing of making the portion of the page transparent, in which the photograph image Hp is arranged.

Then, the controller 11 reads out the image data of the 3D panoramic image from the auxiliary storage apparatus 13. The controller 11 generates the image data of the book image Bp by overlapping the 3D panoramic image on the page image Pp from below the page image Pp such that a portion of the 3D panoramic image, which corresponds to the direction of the page after the change, is located below the portion of the page image Pp, that has been made transparent.

With this, the controller 11 extracts the photograph image Hp corresponding to the direction of the page after the change, and generates the book image data of the book image Bp in which the extracted photograph image Hp is arranged in the page.

Then, the controller 11 causes the display apparatus 14 to display the book image Bp based on the generated book image data.

With this, corresponding to the change of the direction of the photograph image Hp, the photograph image Hp having the direction of the viewpoint suitable for that direction can be displayed. Accordingly, even if the direction of the photograph image Hp is changed, the photograph image Hp can be always stereoscopically viewed.

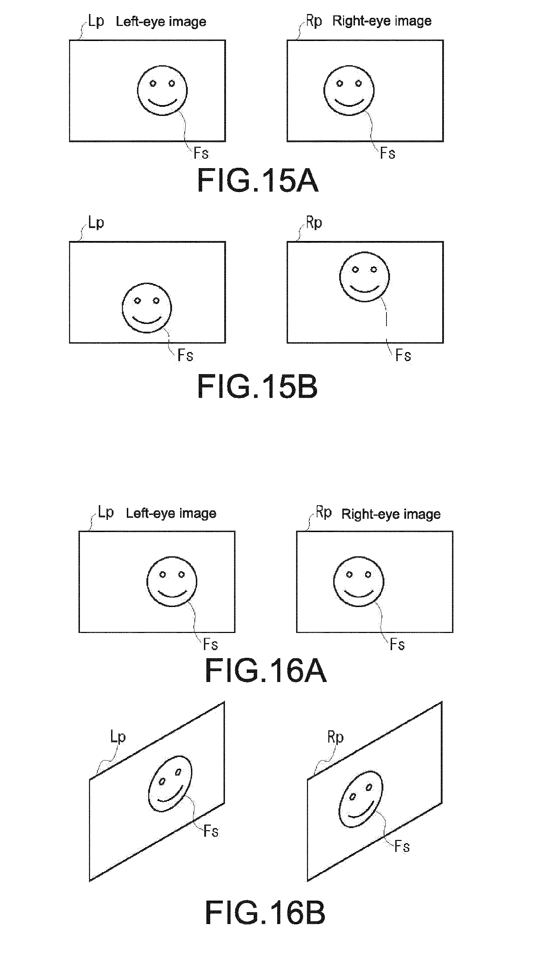

By the way, utilizing a human binocular disparity in the horizontal direction, the stereoscopic image is stereoscopically viewed. Therefore, as shown in Fig. 15A, in a left-eye image Lp and a right-eye image Rp, a position of an object Fs in an image is created to be deviated in the horizontal direction. If the position of the object Fs is, as shown in Fig. 15B, deviated in the perpendicular direction between the left-eye image Lp and the right-eye image Rp, a person cannot stereoscopically view the object Fs because the human brain cannot perceive the subjects as the same object.

Here, when pages of the electronic book are arranged as stereoscopic objects in the virtual 3D space and a state in which pages are turned is displayed as described above, processing of changing the direction of the page on the screen (i.e., deforming and tilting pages) is performed.

When the stereoscopic image formed of the left-eye image Lp and the right-eye image Rp shown in Fig. 16A is arranged in this page, if the stereoscopic image is deformed as with the page, as shown in Fig. 16B, deviation between the left-eye image Lp and the right-eye image Rp is oblique. That is, the left-eye image Lp and the right-eye image Rp are deviated not only in the horizontal direction but also in the perpendicular direction, and hence the user cannot stereoscopically view the image, which strains the brain.

In contrast, in the book reading apparatus 10, when the page is turned, the book image Bp is generated by overlapping the 3D panoramic image including the photograph image Hp having the direction of the viewpoint suitable for the direction of the page, on the page image Pp from below the page image Pp changed in the direction of the page.

Accordingly, when the direction of the photograph image Hp is changed with the change of the direction of the page, processing of deforming the photograph image Hp is not performed. Therefore, it is possible to prevent the user from failing to stereoscopically view the photograph image Hp.

With the above-mentioned configuration, when the direction of the photograph image Hp included in the book image Bp is changed, the book reading apparatus 10 extracts, from the 3D panoramic image, the photograph image Hp corresponding to the direction after the change, and generates data of the book image Bp including the extracted photograph image Hp.

With this, corresponding to the change of the direction of the photograph image Hp included in the book image Bp, the book reading apparatus 10 can display the photograph image Hp suitable for that direction. Accordingly, even if the direction of the photograph image Hp is changed, the book reading apparatus 10 enables the user to always view stereoscopically the photograph image Hp. Thus, even if the direction of the photograph image Hp is changed, the book reading apparatus 10 can realize a natural stereoscopic effect of the photograph image Hp.

### <2. Other Embodiments>

### [2-1. Another Embodiment 1]

Note that, in the above-mentioned embodiment, a page is turned (direction of page is changed), to thereby change the direction of the photograph image Hp arranged in the page.

It is not limited thereto. The direction of the electronic book itself may be changed, to thereby change the direction of the photograph image Hp arranged in the page of the electronic book.

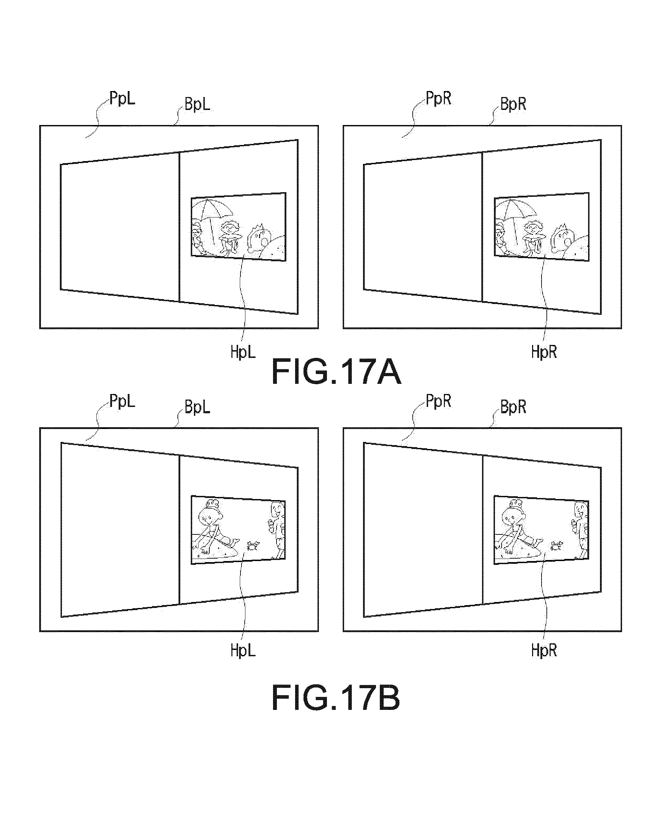

For example, when an operation input of changing the direction of the electronic book itself is performed via the input apparatus 15, as shown in Figs. 17, the controller 11 arranges the photograph image Hp corresponding to the direction of the electronic book itself in the page image Pp in which the electronic book itself has been changed, and generates the book image Bp.

Specifically, for example, as shown in Fig. 17A, when the direction of the electronic book itself is changed to the left by 40 degrees, the controller 11 arranges the left-eye photograph image HpL having the direction of the viewpoint of 40 degrees that is suitable for that direction in the left-eye page image PpL, and generates the left-eye book image BpL. Further, the controller 11 arranges the right-eye photograph image HpR having the direction of the viewpoint of 40 degrees in the right-eye page image PpR, and generates the right-eye book image BpR.

Further, for example, as shown in Fig. 17B, when the direction of the electronic book itself is changed to the right by 40 degrees, the controller 11 generates the left-eye book image BpL in which the left-eye photograph image HpL having the direction of the viewpoint of -40 degrees that is suitable for that direction is arranged in the left-eye page image PpL. Further, the controller 11 generates the right-eye book image BpR in which the right-eye photograph image HpR having the direction of the viewpoint of -40 degrees is arranged in the right-eye page image PpR.

Further, it is not limited thereto. The position of the electronic book itself may be changed, to thereby change the position of the photograph image Hp arranged in the page of the electronic book.

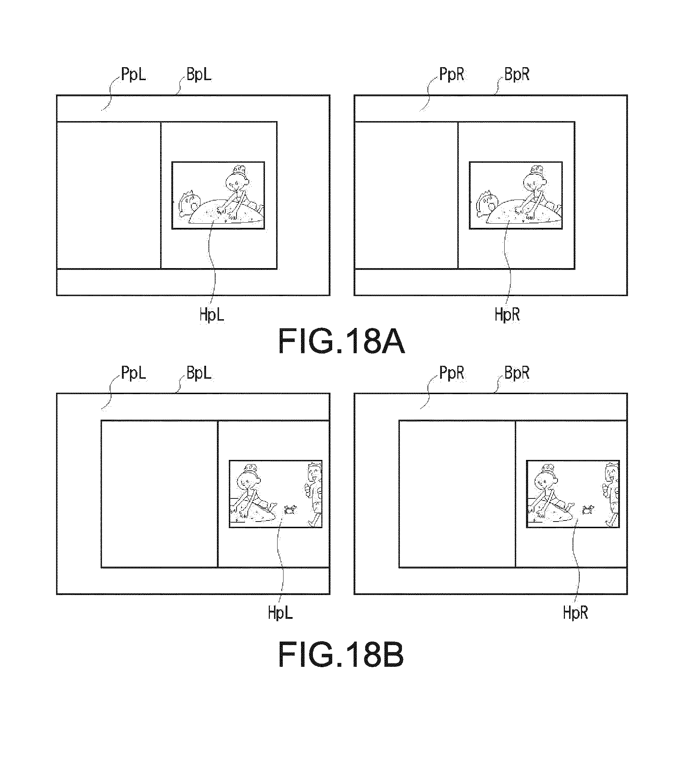

For example, when an operation input of changing (sliding) the position of the electronic book itself is performed via the input apparatus 15, as shown in Figs. 18, the controller 11 arranges the photograph image Hp corresponding to the position of the electronic book itself in the page image Pp in which the position of the electronic book itself has been changed, and generates the book image Bp.

Specifically, for example, as shown in Fig. 18A, when the position of the photograph image Hp arranged in the page is in the center of the book reading screen 100, the direction of the viewpoint corresponding to the center position is set to, for example, 0 degrees. In view of this, the controller 11 generates the left-eye book image BpL in which the left-eye photograph image HpL having the direction of the viewpoint of 0 degrees corresponding to the position of the photograph image Hp is arranged in the left-eye page image PpL. Further, the controller 11 generates the right-eye book image BpL in which the right-eye photograph image HpR having the direction of the viewpoint of 0 degrees is arranged in the right-eye page image PpR.

Further, for example, as shown in Fig. 18B, when the position of the photograph image Hp arranged in the page is located at a position near a right end of the book reading screen 100, the direction of the viewpoint corresponding to this position is set to, for example, -40 degrees. In view of this, the controller 11 generates the left-eye book image BpL in which the left-eye photograph image HpL having the direction of the viewpoint of -40 degrees corresponding to the position of the photograph image Hp is arranged in the left-eye page image PpL. Further, the controller 11 generates the right-eye book image BpL in which the right-eye photograph image HpR having the direction of the viewpoint of -40 degrees is arranged in the right-eye page image PpR.

As described above, when the controller 11 changes the position of the photograph image Hp, the controller 11 arranges the photograph image Hp corresponding to the position after the change in the book image Bp. With this, the controller 11 can display the photograph image Hp changed in direction of the viewpoint corresponding to the amount of change (sliding amount) of the position of the photograph image Hp.

Further, it is not limited thereto. A portable apparatus such as a cellular phone and a portable terminal may be used as the book reading apparatus 10, an inclination sensor such as an acceleration sensor may be provided in the book reading apparatus 10, and the direction of the photograph image Hp may be changed depending on inclination of the book reading apparatus 10. In this case, the photograph image Hp having the direction of the viewpoint corresponding to the direction of the photograph image Hp after the change may be arranged in the book image Bp.

Further, it is not limited thereto. When both the direction and the position of the photograph image Hp are changed, the photograph image Hp having the direction of the viewpoint corresponding to the direction and the position after the change may be arranged in the book image Bp.

In this manner, when at least one of the direction and the position of the photograph image Hp is changed, the photograph image Hp corresponding to at least one of the direction and the position after the change may be arranged in the book image Bp.

### [2-2. Another Embodiment 2]

Further, in the above-mentioned embodiment, when an operation input of turning a page (changing direction of page) is performed, the photograph image Hp having the direction of the viewpoint suitable for the direction of the page (direction of photograph image Hp) after the change may be displayed.

It is not limited thereto. When an operation input of turning a page (changing direction of page) is performed, the photograph image Hp having a position of the viewpoint suitable for the direction of the page (direction of photograph image Hp) after the change may be displayed.

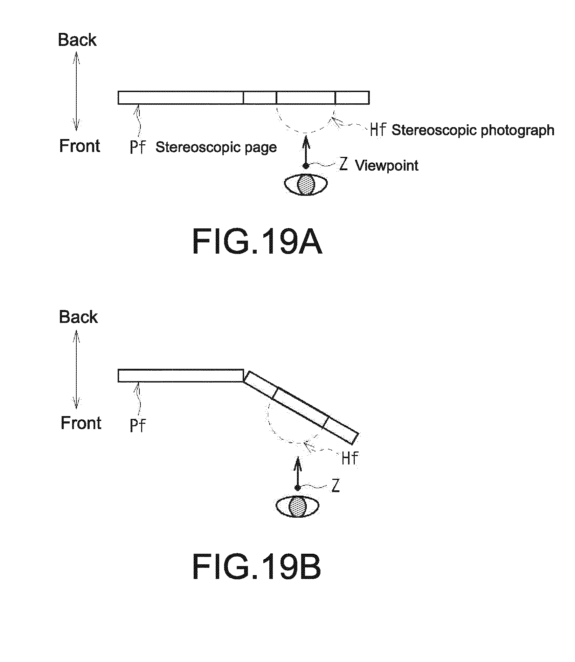

For example, as shown in Figs. 19, the page image Pp is stereoscopically viewed as a stereoscopic shape Pf (stereoscopic page) of a book page, and a space Hf (stereoscopic photograph space) shown by the photograph image Hp is stereoscopically viewed as if the space Hf lifts from the page to the front.

In this case, as shown in Fig. 19A, when the page is not turned, the viewpoint Z is located on the front side as viewed from the stereoscopic photograph space Hf. Therefore, an image when the stereoscopic photograph space Hf is viewed from the front is displayed as the photograph image Hp.

On the other hand, as shown in Fig. 19B, when the page is turned, the viewpoint Z is located at a position moved in an oblique direction by an amount corresponding to the direction of the page as viewed from the stereoscopic photograph space Hf. Therefore, an image when the stereoscopic photograph space Hf is viewed at the position moved in the oblique direction by an amount corresponding to the direction of the page is displayed as the photograph image Hp.

In this manner, assuming that the stereoscopic photograph space Hf showing the photograph image Hp is actually stereoscopic, it is considered that a position of the viewpoint with respect to the stereoscopic photograph space Hf changes as the direction of the stereoscopic photograph space Hf is changed corresponding to turning of a page.

In view of this, the controller 11 changes the photograph image Hp such that the position of the viewpoint with respect to the stereoscopic photograph space Hf horizontally moves as the direction of the photograph image Hp changes corresponding to the turning of the page. Specifically, when the page is turned from the right to the left, the position of the viewpoint with respect to the stereoscopic photograph space Hf moves from the front to the right. Meanwhile, when the page is turned from the left to the right, the position of the viewpoint with respect to the stereoscopic photograph space Hf moves from the front to the left.

With this, also while the page is being turned, the book reading apparatus 10 can realize a natural stereoscopic effect of the space (stereoscopic photograph space Hf) shown by the photograph image Hp arranged in the page.

As described above, on the premise of processing of changing a display of the photograph image Hp, the plurality of photograph images Hp different in position of the viewpoint are prepared.

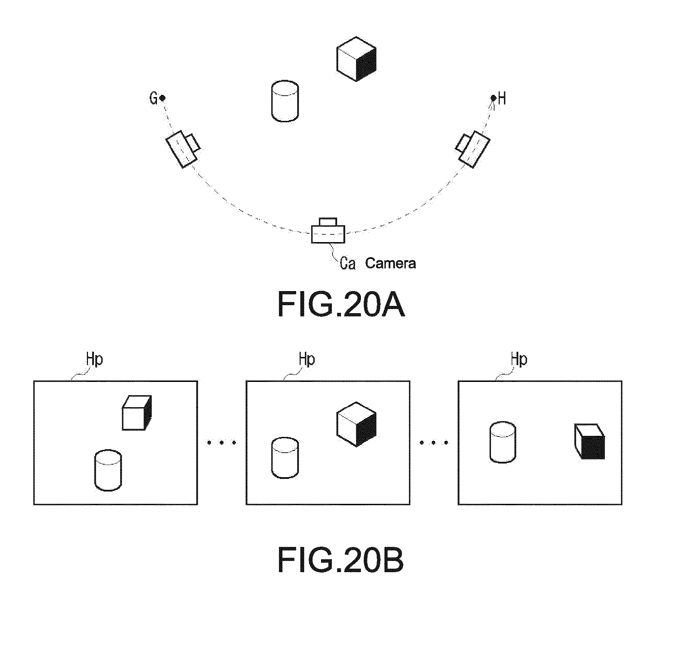

For example, as shown in Fig. 20A, by continuously performing photography while moving the position of the camera Ca from a point G to a point H, as shown in Fig. 20B, the plurality of photograph images Hp different in position of the viewpoint can be acquired. Note that, at this time, such that the photograph image Hp is the stereoscopic image, photography is performed by a twin-lens camera that can perform photography from two viewpoints, for example.

The thus image data of the plurality of photograph images Hp at different positions of the viewpoint is stored in the auxiliary storage apparatus 13. Further, correspondence data is also stored in the auxiliary storage apparatus 13. The correspondence data indicates a correspondence between the direction of the page (photograph image Hp) and the photograph image Hp having the position of the viewpoint suitable for actually stereoscopically displaying the photograph image Hp in that direction.

When the direction of the page is changed, the controller 11 extracts the photograph image Hp corresponding to the direction of the page from the plurality of photograph images Hp at different positions of the viewpoint that are stored in the auxiliary storage apparatus 13 based on the correspondence data. Then, the controller 11 combines the page image Pp in which the direction of the page has been changed with the extracted photograph image Hp, and generates the image data of the book image Bp in which the photograph image Hp is arranged in the page.

Accordingly, the book reading apparatus 10 can perform displaying such that the position of the viewpoint with respect to the photograph image Hp changes as the direction of the photograph image Hp changes, which can cause the user to feel as if the photograph image Hp is actually stereoscopic.

Further, it is not limited thereto. When the direction of the photograph image Hp is changed, both the direction and the position of the viewpoint of the photograph image Hp may be changed. In this case, the image data including the plurality of photograph images Hp different in both of the direction and the position of the viewpoint is stored in the auxiliary storage apparatus 13. When the direction of the photograph image Hp is changed, the controller 11 generates the image data of the book image Bp in which the photograph image Hp having the direction and the position of the viewpoint corresponding to the above-mentioned direction that is extracted from the image data is arranged in the page.

In this manner, when the direction of the photograph image Hp is changed, from the image data including the plurality of photograph images Hp different in at least one of the direction and the position of the viewpoint, the photograph image Hp corresponding to the direction after the change may be extracted and arranged in the page.

### [2-3. Another Embodiment 3]

In addition, in the above-mentioned embodiment, when the direction of the page is changed, the photograph image Hp corresponding to the direction of the page after the change is extracted from the 3D panoramic image.

It is not limited thereto. Among the plurality of photograph images Hp different in direction of the viewpoint, the photograph image Hp corresponding to the direction of the page after the change may be selected, to thereby extract the photograph image Hp corresponding to the direction of the page after the change.

In this case, a plurality of photograph images Hp different in direction of the viewpoint are prepared and the image data of the photograph image Hp for each of the directions of the viewpoint is stored in the auxiliary storage apparatus 13.

The plurality of photograph images Hp different in direction of the viewpoint can be generated by using a twin-lens camera that can perform photography from two viewpoints, for example, to photograph the left-eye photograph image HpL and the right-eye photograph image HpR in a plurality of different capturing directions.

When the direction of the page is changed, the controller 11 generates the left-eye page image PpL and the right-eye page image PpR in which the direction of the page has been changed. The controller 11 subjects each of the left-eye page image PpL and the right-eye page image PpR to processing of making the portions transparent, in which the left-eye photograph image HpL and the right-eye photograph image HpR are arranged.

Further, the controller 11 selects, among the plurality of photograph images Hp for each of the directions of the viewpoint that are stored in the auxiliary storage apparatus 13, the photograph image Hp (left-eye photograph image HpL and right-eye photograph image HpR) corresponding to the direction of the page.

Specifically, for example, as shown in Fig. 5, it is assumed that the photograph images Hp different in direction of the viewpoint at every 20 degrees are stored in the auxiliary storage apparatus 13. At this time, the controller 11 selects, as the photograph image Hp corresponding to the direction of the page, the photograph image Hp having the direction of the viewpoint closest to the direction of the viewpoint suitable for the direction of the page among the stored photograph images Hp, for example. For example, when the direction of the page is 40 degrees, the controller 11 selects the photograph image Hp having the direction of the viewpoint of 40 degrees. Further, for example, when the direction of the page is 25 degrees, the controller 11 selects the photograph image Hp having the direction of the viewpoint of 20 degrees that is closest to 25 degrees of the direction of the viewpoint among the stored photograph images Hp.

Such that the selected left-eye photograph image HpL is located below the transparent portion CL of the left-eye page image PpL in which the direction of the page has been changed, the controller 11 combines the left-eye photograph image HpL with the left-eye page image PpL, and generates and displays the left-eye book image BpL. Further, such that the selected right-eye photograph image HpR is located below the transparent portion CR of the right-eye page image PpR in which the direction of the page has been changed, the controller 11 combines the right-eye photograph image HpR with the right-eye page image PpR, and generates and displays the right-eye book image BpR.

### [2-4. Another Embodiment 4]

In addition, in the above-mentioned embodiment, when an operation input of turning a page (i.e., changing direction of page) is performed, the photograph image Hp corresponding to the direction of the page after the change is arranged in the page image Pp in which the direction of the page has been changed, to generate the book image Bp.

It is not limited thereto. For each of directions of a plurality of different pages, the book image Bp in which the photograph image Hp corresponding to that direction is arranged in the page image Pp in which the page is oriented to that direction may be generated.

For example, in an information processing apparatus such as a personal computer, it is assumed that the controller generates a moving image in which the direction of the page continuously changes from 0 degrees to 180 degrees (i.e., page is turned).

In this case, for example, at every 6 degrees with 180 degrees being divided into 30 parts, the photograph image Hp having the direction of the viewpoint corresponding to the direction of the page is prepared, and the image data of the photograph image Hp is stored in the storage unit. Note that the photograph image Hp is the stereoscopic image and the left-eye photograph image HpL and the right-eye photograph image HpR are stored for each of the directions of the page.

The controller generates, for example, at every 6 degrees with 180 degrees being divided into 30 parts, the page image Pp (left-eye page image PpL and right-eye page image PpR) in which the direction of the page has been changed. Then, for each of the directions of the page, the controller extracts, from the plurality of photograph images Hp stored in the storage unit, the photograph image Hp corresponding to that direction. Then, for each of the directions of the page, the controller arranges the extracted photograph image Hp corresponding to that direction in the page image Pp in which the page is oriented to that direction, and generates the image data of the book image Bp (left-eye book image BpL and right-eye book image BpR).

Based on the generated image data of the book image Bp for each of the directions of the pages, the controller generates the moving image data of the moving image in which the direction of the page continuously changes over time. The controller generates this moving image data according to a format of a 3D moving image, for example, moving picture experts group-multiview video coding (MPEG-MVC). Then, the controller writes the moving image data on a recording medium, for example, a Blu-ray disc (BD) (registered trademark).

When a recording medium (e.g., BD) on which such moving image data is recorded is reproduced by a reproduction apparatus (e.g., BD player) or the like, the user can view the moving image expressing a state in which pages of the electronic book are turned.

Further, in this moving image, with the change of the direction of the page (i.e., direction of photograph image Hp), the photograph image Hp is sequentially replaced by the photograph image Hp corresponding to the direction after the change. Therefore, corresponding to the change of the direction of the photograph image Hp, the photograph image Hp suitable for that direction can be displayed, and can be stereoscopically viewed even if the direction of the photograph image Hp is changed.

Further, in the reproduction apparatus, for example, if the moving image is stopped temporarily, the user can check the page of the electronic book for a while. Further, for example, by playing backwards the moving image, the pages can be referred back to.

By the way, in some apparatuses, due to a load of processing of combining the page image Pp with the photograph image Hp and generating the book image Bp, it may be impossible to execute processing according to an operation input for turning a page (i.e., changing direction of page) in real time.

In view of this, as described above, for each of the plurality of different directions of the page, a PC or the like generates, in advance, the book image Bp in which the photograph image Hp corresponding to that direction is arranged in the page image Pp in which the page is oriented to that direction. Then, based on this, the moving image data of the moving image in which the direction of the page continuously changes is generated and recorded on the recording medium.

With this, only by the reproduction apparatus reproducing the moving image data recorded on the recording medium, the moving image of turning a page of the electronic book can be viewed by the user while a natural stereoscopic effect of the photograph image Hp arranged in the page image Pp is realized.

It should be noted that the reproduction apparatus may download and reproduce the thus generated moving image data via a network.

### [2-5. Another Embodiment 5]

In addition, in the above-mentioned embodiment, the photograph image Hp being the stereoscopic image is arranged in the page of the electronic book being as the object included in the book image Bp to be displayed on the screen, and the photograph image Hp in which the direction of the viewpoint has been changed is displayed corresponding to the change of the direction of the page.

It is not limited thereto. A photograph image being an image (2D image) not being a stereoscopic image may be arranged in a page, and the photograph image in which the direction of the viewpoint has been changed may be displayed corresponding to the change of the direction of the page.

In this case, in the photograph image being the 2D image, the image data of the plurality of photograph images different in direction of the viewpoint is stored in the auxiliary storage apparatus 13. When the direction of the page is changed, the controller 11 extracts, from the plurality of photograph images different in direction of the viewpoint, the photograph image having the direction of the viewpoint corresponding to the direction of the page after the change. Then, the controller 11 arranges the extracted photograph image in the page image in which the direction of the page has been changed, and generates and displays a book image.

### [2-6. Another Embodiment 6]

In addition, in the above-mentioned embodiment, the photograph image Hp being the stereoscopic image is arranged in the page of the electronic book being the object included in the book image Bp being the display image to be displayed on the screen.

It is not limited thereto. Various other images may be displayed as the display image. This display image is not limited to include the page of the electronic book and may include various other objects. Further, in a case of the stereoscopic image, various other images may be arranged in the object.

Further, it is not limited to the book image Bp in which the photograph image Hp is arranged in the page. As long as it is the display image including the stereoscopic image, when various other images are displayed and at least one of the direction and the position of the stereoscopic image included in that image is changed, the present invention may be applied.

### [2-7. Another Embodiment 7]

In addition, in the above-mentioned embodiment, the book reading apparatus 10 serving as the image processing apparatus 1 is provided with the controller 2 serving as the generator 2 and the read-out unit 5, the auxiliary storage apparatus 13 serving as the storage unit 4, the display apparatus 14 serving as the display unit 7, and the input apparatus 15 serving as the input unit 6.

The present invention is not limited thereto. As long as it has similar functions, the respective functional units of the book reading apparatus 10 described above may be configured by various other hardware.

Further, the generator 2 and the read-out unit 5, and the storage unit 4 may be provided in separate apparatuses. For example, from a server including the storage unit 4 storing the stereoscopic image data 3, via a network, the read-out unit 5 of a terminal apparatus may read out the stereoscopic image data 3. In addition, the generator 2 and the read-out unit 5, the display unit 7, and the input unit 6 are provided in separate apparatuses.

In addition, in the above-mentioned embodiment, the present invention is applied to the book reading apparatus 10. It is not limited thereto. As long as it is an apparatus capable of generating data of the display image including the stereoscopic image, the present invention may or can be applied to various other apparatuses, for example, a digital camera, a personal computer, or a cellular phone.

### [2-8. Another Embodiment 8]

In addition, in the above-mentioned embodiment, programs for executing various types of processing are written in the ROM or the auxiliary storage apparatus 13 of the book reading apparatus 10.

It is not limited thereto. For example, the book reading apparatus 10 may be provided with a slot for a storage medium such as a memory card, and the controller 11 may read out and execute the programs from the storage medium inserted into the slot. Further, the controller 11 may install the programs read out from the storage medium into the auxiliary storage apparatus 13. In addition, the book reading apparatus 10 may be provided with a network interface, and the controller 11 may download the programs from an apparatus on a network via the network interface and install the programs into the auxiliary storage apparatus 13.

### [2-9. Another Embodiment 9]

In addition, the present invention is not limited to the embodiment and other embodiments described above. That is, an application range of the present invention includes an aspect in which part or all of the embodiment and other embodiments described above are combined or an aspect in which part of the embodiment and other embodiments described above is extracted.

### Industrial Applicability

The present invention can be widely utilized in, for example, an electronic apparatus that generates data of the display image including the stereoscopic image.

### Description of Reference Numerals

- 1: image processing apparatus
- 2: controller
- 3: stereoscopic image data
- 4: storage unit
- 5: read-out unit
- 6: input unit
- 7: display unit
- 10: book reading apparatus
- 11: controller
- 12: main storage apparatus
- 13: auxiliary storage apparatus
- 14: display apparatus
- 15: input apparatus

## Claims

1. An image processing apparatus, comprising:
a generator to generate display image data being data of a display image including a stereoscopic image; and
a read-out unit to read out stereoscopic image data from a storage unit storing the stereoscopic image data being data including a plurality of stereoscopic images different in at least one of a direction and a position of a viewpoint, the generator extracting, when at least one of the direction and the position of the stereoscopic image included in the display image is changed, a stereoscopic image corresponding to at least one of the direction and the position after the change from a plurality of stereoscopic images included in the stereoscopic image data read out by the read-out unit, and generating display image data of a display image including the extracted stereoscopic image.

2. The image processing apparatus according to claim 1, wherein
the stereoscopic image included in the display image is arranged in the object included in the display image, and
the generator extracts, when at least one of the direction and the position of the stereoscopic image arranged in the object is changed with a change of at least one of a direction and a position of the object, the stereoscopic image corresponding to at least one of the direction and the position after the change from the plurality of stereoscopic images included in the stereoscopic image data read out by the read-out unit, arranges the extracted stereoscopic image in the object changed in at least one of a direction and a position, and generates display image data of a display image including the object.

3. The image processing apparatus according to claim 2, wherein
the stereoscopic image data is data of a panoramic image obtained by connecting the plurality of stereoscopic images different in the at least one of the direction and the position of the viewpoint.

4. The image processing apparatus according to claim 3, wherein
a portion of the object, in which the stereoscopic image is arranged, is made transparent, and
the generator overlaps, when at least one of the direction and the position of the stereoscopic image arranged in the object is changed with a change of at least one of the direction and the position of the object, the panoramic image on the display image from below the display image such that a portion of the panoramic image, which corresponds to at least one of the direction and the position after the change, is located below the portion of the object changed in at least one of the direction and the position, which has been made transparent, to thereby extract, from the panoramic image, a stereoscopic image corresponding to at least one of the direction and the position after the change and arrange the stereoscopic image in the object.

5. The image processing apparatus according to claim 2, wherein
the stereoscopic image data includes data for each of the plurality of stereoscopic images different in at least one of the direction and the position of the viewpoint.

6. The image processing apparatus according to claim 5, wherein
the portion of the object, in which the stereoscopic image is arranged, is made transparent, and
the generator selects, when at least one of the direction and the position of the stereoscopic image arranged in the object is changed with a change of at least one of the direction and the position of the object, the stereoscopic image corresponding to at least one of the direction and the position after the change from the plurality of stereoscopic images included in the stereoscopic image data, to thereby extract the stereoscopic image corresponding to at least one of the direction and the position after the change and arrange the extracted stereoscopic image below the portion of the object changed in at least one of the direction and the position, which has been made transparent.

7. The image processing apparatus according to claim 1, wherein
the generator extracts, when an operation input for changing at least one of the direction and the position of the stereoscopic image included in the display image is performed via an input unit, the stereoscopic image corresponding to at least one of the direction and the position after the change from the plurality of stereoscopic images included in the stereoscopic image data read out by the read-out unit, generates display image data of a display image including the extracted stereoscopic image, and causes a display unit to display the display image based on the display image data.

8. The image processing apparatus according to claim 1, wherein
the generator generates, based on the stereoscopic image data read out by the read-out unit, moving image data of a moving image in which at least one of the direction and the position of the stereoscopic image included in the display image continuously changes.

9. An image processing method, comprising:
extracting, when at least one of a direction and a position of a stereoscopic image included in a display image is changed, a stereoscopic image corresponding to at least one of the direction and the position after the change from a plurality of stereoscopic images included in stereoscopic image data being data including the plurality of stereoscopic images different in at least one of a direction and a position of a viewpoint; and
generating display image data being data of a display image including the extracted stereoscopic image.

10. An image processing program for causing a computer to execute:
an extraction step of extracting, when at least one of a direction and a position of a stereoscopic image included in a display image is changed, a stereoscopic image corresponding to at least one of the direction and the position after the change from a plurality of stereoscopic images included in stereoscopic image data being data including a plurality of stereoscopic images different in at least one of a direction and a position of a viewpoint; and
a generation step of generating display image data being data of a display image including the extracted stereoscopic image.
